# EUROPÄISCHE PATENTSCHRIFT

(11) **EP 1 921 428 B1**
(45) Veröffentlichungstag und Bekanntmachung des Hinweises auf die Patenterteilung: **30.06.2010**
(21) Anmeldenummer: 06123898.6
(22) Anmeldetag: 11.11.2006
(51) Int. Cl.: G01G 3/14

(54) **Verfahren zur Überwachung und/oder Bestimmung des Zustandes einer Kraftmessvorrichtung und Kraftmessvorrichtung**
Method for monitoring and/or determining the condition of a force measuring device and force measuring device
Procédé destiné à la surveillance et/ou la détermination de l'état d'un dispositif de mesure de force et dispositif de mesure de force

(43) Veröffentlichungstag der Anmeldung: 14.05.2008
(73) Patentinhaber: Mettler-Toledo AG, 8606 Greifensee (CH)
(72) Erfinder: von Arb, Hans-Peter, 6340 Baar (CH); Emery, Jean-Christophe, 8005 Zürich (CH); Reber, Daniel, 8322 Madetswil (CH); Bucher, Cyrill, 8610 Uster (CH); Bühler, Stefan, 8603 Schwerzenbach (CH); Künzi, Hansruedi, 8606 Greifensee (CH)

(56) Entgegenhaltungen:
- EP-A2- 0 261 951
- EP-A2- 0 710 825
- DE-C1- 19 725 455
- US-A1- 4 413 527

## Beschreibung

Die vorliegende Erfindung betrifft ein Verfahren zur Überwachung und/oder zur Bestimmung des Zustandes einer Kraftmessvorrichtung mit mindestens einem, einen Innenraum aufweisenden Gehäuse und mit mindestens einer, im Innenraum des mindestens einen Gehäuses eingebauten Kraftmesszelle, mit einer Mess- und/oder Auswerteelektronik, sowie eine zur Ausführung des Verfahrens geeignete Kraftmessvorrichtung.

Viele Kraftmessvorrichtungen, insbesondere gravimetrische Messgeräte wie beispielsweise Waagen, insbesondere im Labor in der Produktion oder Ladenwaagen, Thermogravimetriegeräte, Messgeräte zur gravimetrischen Feuchtigkeitsbestimmung, Wägemodule für Tankanlagen und Reaktorbehälter, Wägemodule und Mehrfachwägevorrichtungen in Abfüll- und Verpackungsanlagen, aber auch Drehmoment- und Beschleunigungsmessvorrichtungen werden hinsichtlich ihrer teilweise sehr unkontrollierbaren Einsatzumgebung mit wirkungsvollen Massnahmen vor nicht ionisierenden Strahlungen, insbesondere elektromagnetischen Feldern geschützt. Diese Schutzmassnahmen sind unter anderem auf die Einsatzumgebung angepasste Kraftmessvorrichtungen, welche entsprechende Vorschriften in Bezug auf Strahlungsresistenz und dergleichen erfüllen müssen, wie diese beispielsweise in den Normen EN45501 oder IEC61326 klassifiziert sind.

Abschirmungen und Kompensationselemente/-Schaltungen zur Eliminierung von Strahlungseinflüssen sind zum Beispiel aus EP 0 261 951, DE 197 25 455, EP 0 710 825 bzw US 4 413 527 bekannt.

Kraftmesszellen für Wägemodule sind beispielsweise in metallischen Stahlgehäusen eingebaut. Die in solchen Gehäusen untergebrachten Kraftmesszellen arbeiten problemlos, solange das Gehäuse die das Messsignal beeinträchtigenden Strahlungseinflüsse von der Kraftmesszelle und der Messelektronik in genügender Weise fernhält, beziehungsweise das Eindringen hochfrequenter elektromagnetischer Felder in das Innere des Gehäuses verhindert.

In Situationen bei denen die gravimetrischen Messgeräte, Wägemodule oder Waagen besonders hohen Feldstärken ausgesetzt sind, könnte es sich in Einzelfällen ergeben, dass jedoch gewisse hochfrequente elektromagnetische Felder durch kleinste Öffnungen und Spalte in das Innere des Gehäuses eindringen und die Messgenauigkeit der Wägemodule nachweisbar stören.

Die Verfälschungen der Messresultate dürften dann zu ungenauen Wägeprozessen führen. Sofern die Messeinrichtung in Industrieanlagen mit hohem Automatisierungsgrad eingebaut ist, könnte eine Störung der Messeinrichtung sogar zu fehlerhaften Produkten führen.

Für eine im Verkauf von Waren eingesetzte Ladenwaage könnte einem Kunden mit einem ungenau oder falsch eingewogenen Produkt entweder ein zu hoher oder ein zu niederer Preis berechnet werden.

Es könnte sich ergeben, dass durch einen Manipulationsfehler und/oder Unachtsamkeit mit Telekommunikations-Einrichtungen hochfrequente elektromagnetische Felder ins Innere des Gehäuses eindringen und die Strahlungsdichte im Gehäuseinnenraum derart erhöhen, dass Teile der Kraftmesszelle oder die Komponenten der Signalverarbeitung beziehungsweise Messelektronik in ihrer Messgenauigkeit beeinträchtigt werden. Der Begriff Telekommunikations-Einrichtungen ist dabei für eine Vielzahl von möglichen Einrichtungen zu verstehen die auf dem Prinzip der elektro-magnetischen Funkübertragung basieren, wie Mobil-Telephone, schnurlos Telephone, Funkanlagen, wireless Datenübertagung, RFIDs und weitere.

Ferner ist es auch denkbar, dass durch absichtliche Manipulation mittels hochfrequenter elektromagnetischer Strahlung eine Veränderung des Messwerts einer Kraftmesseinrichtung hervorgerufen werden soll.

Der vorliegenden Erfindung liegt daher die Aufgabe zugrunde, ein verbessertes Verfahren zur Überwachung und/oder zur Bestimmung des Zustandes einer Kraftmessvorrichtung sowie eine solche Kraftmessvorrichtung anzugeben.

Diese Aufgabe wird mit einem Verfahren und mit einer Kraftmessvorrichtung gelöst, welche die im Anspruch 1 bzw. 17 angegebenen Merkmale aufweisen.

In einem Verfahren zur Überwachung und/oder zur Bestimmung des Zustandes einer Kraftmessvorrichtung mit mindestens einem, einen Innenraum aufweisenden Gehäuse und mit mindestens einer im Innenraum des mindestens einen Gehäuses eingebauten Kraftmesszelle, und mit einer Mess- und/oder Auswerteelektronik, die sich auch ausserhalb des Gehäuses befinden kann, ist mindestens ein im Innenraum des Gehäuses und/oder mindestens ein ausserhalb des Gehäuses angeordneter der Erfassung hochfrequenter elektromagnetischer Felder dienender Sensor vorhanden. Mittels dieses Sensors wird mindestens ein ein vorhandenes hochfrequentes elektromagnetisches Feld charakterisierender Parameter ermittelt; mindestens ein Wert des ermittelten Parameters mit mindestens einem Schwellwert verglichen und bei Überschreiten des mindestens einen Schwellwerts eine Aktion der Kraftmessvorrichtung ausgelöst.

Der Begriff elektromagnetische Felder wird hier in allgemeiner Bedeutung verwendet und umfasst auch elektromagnetische Strahlung, insbesondere solche, wie sie von Telekommunikations-Einrichtungen ausgesandt wird.

Das Verfahren bietet einem Benutzer der Kraftmessvorrichtung den Vorteil, dass es im Falle des Vorhandenseins hochfrequenter elektromagnetischer Felder von besonders hoher Feldstärke oder besonders potenziell störender Frequenzen einen das Messergebnis einer Kraftmessvorrichtung beeinflussenden Faktor ausschliessen kann und gegebenenfalls Auskunft über eine vorliegende Störung geben kann. Somit wird verhindert, dass eine ein falsches Messergebnis hervorrufende Kraftmessung, insbesondere im Fall von Waagen eine Wägung, ausgeführt wird. Dies insbesondere dann, wenn der Wert des ermittelten Parameters, insbesondere der Feldstärke, einen vordefinierbaren Schwellwert übersteigt. Es wird einem Benutzer der Kraftmessvorrichtung eine Möglichkeit an die Hand gegeben, das Problem zu erkennen, gegebenenfalls zu beseitigen, um zu einem korrekten Messergebnis zu gelangen. Im erfindungsgemässen Verfahren werden mittels des mindestens einen Sensors elektromagnetische Felder im Frequenzbereich von Telekommunikations-Einrichtungen ermittelt, wobei als Parameter die Frequenz, der Frequenzbereich und/oder die Feldstärke der hochfrequenten elektromagnetischen Felder ermittelt werden kann.

In bevorzugter Ausgestaltung weist die Kraftmessvorrichtung eine Recheneinheit und eine Speichereinheit auf, in welcher Recheneinheit ein Programm ausgeführt wird, welches den Wert der ermittelten Feldstärke mit mindestens einem in der Speichereinheit und/oder der Recheneinheit veränderbar vordefinierten Schwellwert vergleicht. Insbesondere kann der ermittelte Wert zur weiteren Verarbeitung in der Speichereinheit abgelegt werden. In der Kraftmessvorrichtung ist bevorzugterweise ein Zeitgeber vorhanden, wobei die Recheneinheit auf diesen zugreifen kann und das Programm jedem ermittelten Wert, einen Zeitwert zuordnen kann und das Wertepaar in der Speichereinheit ablegen kann. Damit ist eine Rückverfolgbarkeit hinsichtlich potenziell störender Ereignisse möglich und im Falle des Auswertens einer zeitlichen Abfolge von Feldstärkewerten oder Werten der ermittelten Feldstärke in ihrer Abhängigkeit von der Frequenz oder von einem Frequenzbereich der elektromagnetischen Felder, beispielsweise durch einen Servicetechniker, eine Rückverfolgbarkeit möglich wird und Aufschluss über die Umgebung der Kraftmessvorrichtung erhalten werden kann und gegebenenfalls Massnahmen zur Beseitigung von Störungen eingeleitet werden können.

Unter dem Begriff Recheneinheit werden alle signalverarbeitenden Elemente wie analoge Schaltkreise, digitale Schaltkreise, integrierte Schaltkreise, Prozessoren, Computer und dergleichen verstanden, die die durch den Sensor generierten Sensorsignale mit bereits in der Recheneinheit gespeicherten oder eingestellten Werten vergleicht. Diese Werte, insbesondere Maximalwerte, Schwellwerte und Benutzungsgrenzwerte können aus Regelwerken wie nationalen oder internationalen Normen stammen, aus Vergleichsmessungen ermittelt oder vom Hersteller der Kraftmessvorrichtung festgelegt worden sein. Dabei kann die Kraftmessvorrichtung bei Bedarf auch mehrere Recheneinheiten aufweisen, beispielsweise kann für jeden eingebauten Sensor eine eigene Recheneinheit vorhanden sein.

Weist die Kraftmessvorrichtung eine Ausgabeeinheit, insbesondere einen Bildschirm einer Anzeige- und Bedieneinheit und/oder mindestens eine Leuchtdiode und/oder einen Drucker auf, besteht ein bevorzugter Verfahrensschritt darin, ein vom ermittelten Wert des das hochfrequente elektromagnetische Feld charakterisierenden Parameters abhängiges Signal an der Ausgabeeinheit auszugeben. Somit ist ein Benutzer der Kraftmessvorrichtung stets über die Umgebungsbedingungen hinsichtlich hochfrequenter elektromagnetischer Felder informiert.

Der Begriff Ausgabeeinheit steht für alle analog beziehungsweise digital arbeitenden Übermittlungs-, Melde- und Warnsysteme die geeignet sind, die durch den Sensor erzeugten Sensorsignale eines Innenraum- Parameters oder ein Ausgangssignal der Recheneinheit durch geeignete Mittel wie Ton, Licht, Vibrationen, elektrische Signale, elektromagnetische Impulse, numerische Ausgaben und dergleichen mehr darzustellen oder an weitere Geräte, beispielsweise weitere Ausgaben, Leitsysteme, Terminals und dergleichen zu übermitteln. Die Ausgabe kann deshalb auch ein Transponder oder Transmitter sein, welcher die Sensorsignale und/oder Ausgangssignale beispielsweise an ein portables Gerät sendet. Mittels der Ausgabeeinheit kann eine Warnung an den Benutzer ausgegeben, das Ereignis an eine Speichereinheit weitergesendet oder sogar der Hersteller oder dessen Servicestelle beispielsweise über Internetverbindungen direkt alarmiert werden.

Im Fall des Überschreitens des mindestens einen Schwellwerts erfolgt zunächst eine oder mehrere Wiederholungen der Messung, dies insbesondere dann, wenn die Kraftmessvorrichtung beziehungsweise eine mit ihr verbundene Recheneinheit den Wert des das hochfrequente elektromagnetische Feld charakterisierenden Parameters als die Stabilität des Messsignals beeinflussend einstuft. Alternativ oder gleichzeitig kann eine Alarmierung ausgelöst werden und/oder ein Messvorgang unterbrochen und/oder blockiert werden. Auch das Löschen einer Bereitschaftsanzeige ist eine mögliche Aktion der Messelektronik beziehungsweise der Kraftmessvorrichtung. Es ist von besonderem Vorteil hinsichtlich einer Rückverfolgbarkeit den Wert des das hochfrequente elektromagnetische Feld charakterisierenden Parameters zusammen mit einem Zeitwert in ein Logfile der Speichereinheit abzulegen.

Steht bei kalibrierfähigen Kraftmessvorrichtungen, insbesondere Waagen eine Kalibrierung an, so ist bei Überschreiten des Schwellwerts eine Kalibrierung zum betreffenden Zeitpunkt nicht auszuführen und wird erst nach einem anschliessenden Unterschreiten des Schwellwerts durchgeführt.

In einem vorteilhaften Schritt des Verfahrens wird zur Kontrolle des mindestens einen Sensors dessen an die Recheneinheit übermittelten Sensorsignale zumindest periodisch in der Recheneinheit durch einen Vergleich mit in der Speichereinheit gespeicherten Verifizierungswerten und Verifizierungstoleranzwerten überprüft. Bei Abweichung von diesen Verifizierungswerten oder beim Verletzen von vorgegebenen Verifizierungstoleranzwerten wird ein Fehler registriert und an eine Ausgabeeinheit übermittelt. Dies erhöht die Sicherheit des Verfahrens.

Zur Ermittlung des mindestens einen ein vorhandenes hochfrequentes elektromagnetisches Feld charakterisierenden Parameters sind verschiedene Lösungen denkbar. Insbesondere kann ein Signal aus der Messelektronik ausgekoppelt werden und/oder die elektromagnetische Feldstärke innerhalb und/oder ausserhalb des Gehäuses gemessen werden und/oder an einer Kabelverbindung, vorzugsweise eines elektrischen Versorgungskabels oder eines Interfacekabels, ein Signal ausgekoppelt werden.

In einer vorteilhaften Weiterbildung des Verfahrens ist zusätzlich zu dem der Erfassung hochfrequenter elektromagnetischer Felder dienenden mindestens einen Sensor ein weitere Sensor, insbesondere ein Temperatursensor vorhanden. Der mit dem weiteren Sensor ermittelte Wert wird nun mit dem ein vorhandenes hochfrequentes elektromagnetisches Feld charakterisierenden Parameterwert korreliert und zusammen mit dem Überschreiten des Schwellwerts zu einer Bewertung einer zu erfolgenden Aktion der Messelektronik herangezogen.

In besonderer Weise kann auch irgendein Signal oder mehrere Signale der Kraftmessvorrichtung beziehungsweise der Mess- und/oder Auswerteelektronik für sich allein zur Erfassung hochfrequenter elektromagnetischer Felder herangezogen werden, da sich diese im Störungsfall bevorzugt den genannten Signalen überlagern, ohne dass es eines spezifischen physischen Sensors bedarf. In diesem Sinne ist ein der Erfassung hochfrequenter elektromagnetischer Felder dienender Sensor in einer allgemeinen Weise zu verstehen.

In einem weiteren Aspekt der Erfindung kann zusätzlich der Verlauf des Kraftmesssignals in einem vergangenen Zeitintervall aufgezeichnet werden und ein daraus ermittelter Parameterwert zusammen mit dem Überschreiten des Schwellwerts zu einer Bewertung einer zu erfolgenden Aktion der Messelektronik herangezogen werden.

Ein zweiter, bevorzugterweise niedriger liegender Schwellwert kann zusätzlich zu dem eine Aktion der Messelektronik auslösenden Schwellwert modifizierbar in der Recheneinheit abgespeichert sein, wobei beim Überschreiten des zweiten Schwellwerts eine Warnung an einer Ausgabeeinheit ausgegeben wird.

Eine Kraftmessvorrichtung, welche geeignet zur Durchführung des Verfahrens ist, mit mindestens einem, einen Innenraum aufweisenden Gehäuse und mit mindestens einer im Innenraum des mindestens einen Gehäuses eingebauten Kraftmesszelle, und mit einer Mess- und/oder Auswerteelektronik, weist mindestens einen im Innenraum des Gehäuses und/oder mindestens einen ausserhalb des Gehäuses angeordneten der Erfassung hochfrequenter elektromagnetischer Felder dienenden Sensor auf.

Dieser Sensor steht bevorzugt mit der Mess- und/oder Auswerteelektronik in Verbindung, wobei bei einem über mindestens einen vordefinierbaren Schwellwert hinausreichenden vom der Erfassung hochfrequenter elektromagnetischer Felder dienenden Sensor ermittelten Wert eine Aktion der Kraftmessvorrichtung auslösbar ist.

In einer bevorzugten Ausführungsform der Kraftmessvorrichtung weist die Kraftmessvorrichtung eine Recheneinheit sowie eine Speichereinheit auf, wobei in der Recheneinheit ein Programm ausführbar ist, das bei einem über mindestens einen vordefinierbaren Schwellwert hinausreichenden vom der Erfassung hochfrequenter elektromagnetischer Felder dienenden Sensor ermittelten Wert eine Aktion der Kraftmessvorrichtung auslöst und/oder den gemessenen Wert zur weiteren Verarbeitung in der Speichereinheit ablegt.

Der der Erfassung hochfrequenter elektromagnetischer Felder dienende Sensor kann als elektrische Schaltung zur Auskopplung eines Signals der Messelektronik ausgebildet sein und/oder in Form eines breitbandigen und/oder schmalbandigen elektromagnetischen Feldsensors, beziehungsweise Antenne und/oder in Form einer um ein Kabel, insbesondere eines die Kraftmesszelle und/oder die Messelektronik speisenden Stromversorgungskabels oder eines Verbindungskabels, angeordneten Auskopplungsschleife oder Antenne ausgebildet sein.

Insbesondere kann der Sensor innerhalb des Gehäuses an der Innenseite des Kraftmesszellengehäuses oder an der Kraftmesszelle selbst angebracht sein oder auch beispielsweise in der Platine der Signalverarbeitung integriert sein. Vorzugsweise wird der Sensor in unmittelbarer Nähe der auf elektromagnetische Strahlung empfindlichen Bauteile platziert. Das könnte zum Beispiel bei elektromagnetisch kraftkompensierenden Kraftmesssystemen in unmittelbarer Nähe der Spule, ein Teil der Spule oder die Spule selber sein oder auch das Abtastelement einer elektromagnetischen Kraftkompensationsvorrichtung.

Eine vorteilhafte Weiterbildung der Kraftmessvorrichtung sieht vor, dass zusätzlich zum mindestens einen der Erfassung hochfrequenter elektromagnetischer Felder dienenden Sensor ein weiterer Sensor im Innenraum des Gehäuses oder am Gehäuse zur Detektierung von Netzspannungsspitzen in einer die Kraftmesszelle speisenden Stromversorgung angeordnet ist. Zusätzlich zum mindestens einen der Erfassung hochfrequenter elektromagnetischer Felder dienenden Sensor kann nun auch mindestens ein weiterer Sensor im Innenraum des Gehäuses oder am Gehäuse zur Detektierung weitere Parameter, insbesondere der Temperatur angeordnet sein.

In einer weiteren vorteilhaften Ausgestaltung der Erfindung ist die Recheneinheit und/oder eine Ausgabeeinheit drahtlos oder drahtgebunden mit dem mindestens einen Sensor verbunden.

In einer vorteilhaften Weiterbildung der Erfindung ist als mindestens ein der Erfassung hochfrequenter elektromagnetischer Felder dienender Sensor ein solcher vorgesehen, in den ein Speichermodul und/oder ein Messumformer integriert ist.

Die der Erfassung hochfrequenter elektromagnetischer Felder dienenden Sensoren der Kraftmessvorrichtung können so ausgebildet sein, dass in jedem Sensor ein Speichermodul und/oder ein Messumformer und/oder ein Transmitter integriert sind.

Einzelheiten des erfindungsgemässen Verfahrens und der erfindungsgemässen Kraftmessvorrichtung ergeben sich anhand der Beschreibung der in den stark schematisierten Zeichnungen dargestellten Ausführungsbeispiele. Es zeigen:
- Figur 1: eine Prinzipzeichnung einer Kraftmesszelle, die nach dem Prinzip der elektromagnetischen Kraftkompensation arbeitet, in der Seitenansicht;
- Figur 2: in schematischer Darstellung eine Kraftmessvorrichtung in Gestalt einer Waage im Schnitt, mit einem einen Innenraum aufweisenden Gehäuse und einer im Gehäuse angeordneten Kraftmesszelle, wobei der Innenraum zur Durchführung des erfindungsgemässen Verfahrens mindestens einen Sensor aufweist;
- Figur 3: in schematischer Darstellung eine Kraftmessvorrichtung in Gestalt eines Tanklast- Wägemoduls im Schnitt mit einem einen Innenraum aufweisenden Gehäuse und einer im Gehäuse angeordneten Kraftmesszelle, wobei der Innenraum zur Durchführung des erfindungsgemässen Verfahrens einen Sensor aufweist welcher über Verbindungseinrichtungen mit einer, ausserhalb des Gehäuse angeordneten Ausgabeeinheit verbunden ist;
- Figur 4: ein Blockschaltbild einer Kraftmessvorrichtung mit mindestens einem der Erfassung hochfrequenter elektromagnetischer Felder dienenden Sensor in einer ersten Ausgestaltung.
- Figur 5: ein Blockschaltbild einer Kraftmessvorrichtung mit mindestens einem der Erfassung hochfrequenter elektromagnetischer Felder dienenden Sensor in einer zweiten Ausgestaltung.
- Figur 6: ein Blockschaltbild einer Kraftmessvorrichtung mit mindestens einem der Erfassung hochfrequenter elektromagnetischer Felder dienenden Sensor in einer dritten Ausgestaltung.
- Figur 7: ein Blockschaltbild einer Kraftmessvorrichtung mit mindestens einem der Erfassung hochfrequenter elektromagnetischer Felder dienenden Sensor in einer vierten Ausgestaltung.
- Figur 8: ein Blockschaltbild einer Kraftmessvorrichtung mit mindestens einem der Erfassung hochfrequenter elektromagnetischer Felder dienenden Sensor in einer fünften Ausgestaltung.

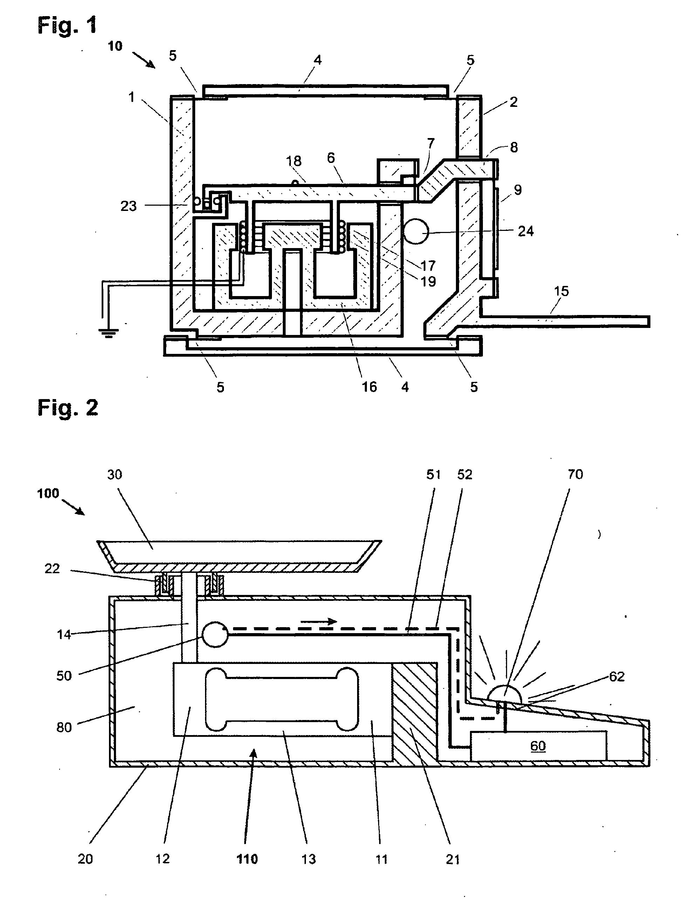

Figur 1 zeigt stark schematisiert eine für eine Verwendung in der Wägetechnologie, insbesondere in einer Waage geeignete Kraftmesszelle 10, die nach dem Prinzip der elektromagnetischen Kraftkompensation arbeitet. Die Kraftmesszelle 10 weist eine Vorrichtung zur Kraftübertragung mit einer Parallelführung mit einem feststehenden Teil 1 und einem vertikal auslenkbaren Lastaufnahmeteil 2, welche jeweils an den Enden eines Paars von Lenkern 4 über Biegelager 5 angelenkt sind, auf. Der Lastaufnahmeteil 2 weist einen zur Aufnahme einer zu messenden Last dienenden Ausleger 15 auf. Die Normalkomponente der von einer Last bewirkten Kraft wird vom Lastaufnahmeteil 2 durch ein Koppelelement 9 auf den kurzen Hebelarm 8 des Hebels 6 übertragen. Der Hebel 6 ist mittels eines Biegelagers 7 an einem Teil des feststehenden Teils 1 abgestützt. Die Kraftmesszelle 10 weist ferner ein topfförmiges Permanentmagnetsystem 16, das in fester Verbindung mit dem feststehenden Teil 1 angeordnet ist, und über einen Luftspalt 17 verfügt, auf. Im Luftspalt 17 ist eine mit dem längeren Hebelarm 18 des Hebels 6 verbundene Spule 19 angeordnet. Die Spule 19 wird von einem Kompensationsstrom durchflossen, dessen Mass von der auf den Hebel 6 einwirkenden Kraft abhängt. Die Lage des Hebels 6 wird von einer opto-elektrischen Messvorrichtung 23 gemessen, die mit einer Regeleinrichtung verbunden ist, welche den Kompensationsstrom in Abhängigkeit der zugeführten Messsignale derart regelt, dass der Hebel 6 stets in gleicher Lage gehalten oder nach einer Laständerung in diese wieder zurückgeführt wird. Ein breitbandiger, der Erfassung hochfrequenter elektromagnetischer Felder dienender Sensor 24 ist an der Kraftmesszelle 10 angeordnet, um dort möglicherweise von aussen eindringende hochfrequente elektromagnetische Felder zu messen. Im Falle einer festgestellten zu hohen Feldstärke, das heisst wenn diese einen vordefinierbaren Schwellwert übersteigt, kann somit eine Aktion der Waage ausgelöst werden.

Die Figur 2 zeigt in schematischer Darstellung eine Kraftmessvorrichtung 100, beziehungsweise eine Waage im Schnitt. Eine Kraftmesszelle 110 weist einen feststehenden Teil 11 und einen Lastaufnahmeteil 12 auf, die durch einen Mittelteil 13 miteinander verbunden sind. Die Kraftmesszelle 110 ist im Innenraum 80 eines Gehäuses 20 angeordnet und mit ihrem feststehenden Teil 11 über den gehäusefesten Support 21 mit dem Gehäuse 20 starr verbunden. Ein ausserhalb des Gehäuses 20 angeordneter Lastaufnehmer 30 in Form einer Waagschale ist über ein Kraftübertragungsgestänge 14 mit dem im Innenraum 80 angeordneten Lastaufnahmeteil12 der Kraftmesszelle 110 verbunden. Das Kraftübertragungsgestänge 14 durchdringt das Gehäuse 20 berührungsfrei durch eine Gehäusedurchführung 22. Die Gehäusedurchführung 22 ist derart ausgebildet, dass ein Eindringen von hochfrequenter elektromagnetischer Strahlung möglichst vermieden oder zumindest stark reduziert wird. Ferner ist im Innenraum 80 mindestens ein der Erfassung hochfrequenter elektromagnetischer Felder dienender Sensor 50 angeordnet, welcher mindestens einen Parameter des hochfrequenten elektromagnetischen Feldes ermittelt. Dieser Parameter kann insbesondere die elektromagnetische Feldstärke und /oder die Frequenz sein. Ein zum ermittelten Wert korrespondierendes Sensorsignal wird zwecks weiterer Verarbeitung über eine Recheneinheit-Verbindung 51 an eine Recheneinheit 60 weitergeleitet und/oder über eine Ausgabe-Verbindung 52 an eine Ausgabeeinheit 70, hier in Form einer Leuchtdiode, weitergeleitet. Die Recheneinheit 60 ist über die Recheneinheit-Ausgabe-Verbindung 62 mit der Ausgabeeinheit 70 verbunden und übermittelt die von der Recheneinheit 60 generierten Ausgangssignale an die Ausgabeeinheit 70. Diese kann entweder direkt an der Aussenseite des Gehäuses 20 angeordnet, vom Gehäuse 20 getrennt angeordnet, oder auch innerhalb des Gehäuses montiert sein, sofern die Ausbildung des Gehäuses 20 (schalldurchlässig, transparent) die Wahrnehmung der Ausgabe ermöglicht. Speziell auf die auszugebende Mitteilung oder Warnung zugeschnittene Symbole und Warnhinweise können die Übermittlung an eine Person verstärken. So ist die Verwendung allgemein bekannter Piktogramme, wie beispielsweise aus dem Strassenverkehr bekannte Signalschilder oder eigens für die entsprechende Warnung kreierte Symbole, denkbar. Mittels der Variierung der Frequenz blinkender visueller Ausgabemittel oder auch der Variierung von Lautstärke und Tonfrequenz phonetischer Ausgabemittel kann der Grad der Wichtigkeit der Warnung oder Meldung variiert werden. Jede der Verbindungen 51, 52, 62 im Ausführungsbeispiel von Figur 2 kann entweder eine Kabelverbindung wie ein Signalkabel, ein Bussystem und dergleichen, oder eine kabellose Verbindung sein.

Sobald ein Parameter des Innenraums 80, in diesem Ausführungsbeispiel die Feldstärke hochfrequenter elektromagnetischer Strahlung, sich verändert oder einen vordefinierten zulässigen Schwellwert übersteigt, wird eine Aktion der Waage ausgelöst. Diese kann vermittels der Recheneinheit 60 erfolgen oder direkt in der Mess- und/oder Auswerteelektronik der Waage, von der die Recheneinheit wiederum einen Teil darstellen kann. Eine solche Aktion bei Überschreiten des vordefinierten Schwellwerts kann im Falle, dass gerade ein Wägewert aufgenommen werden soll, in einer Wiederholung der Messung bestehen, indem die Messelektronik der Waage einem solchen Messwert keine Stabilität oder eine beträchtliche Unter- oder Überlast zuordnet. Eine Wiederholung der Messung kann auch mehrfach erfolgen, zumindest über einen gewissen tolerablen Zeitraum hinweg, insbesondere jedoch nur so lange, bis die gemessene Feldstärke auf einen Wert unterhalb des Schwellwerts abgefallen ist. Ist oben erwähnter tolerabler Zeitraum überschritten oder der ermittelte Parameterwert zu hoch, so kann der Messvorgang unterbrochen und/oder blockiert werden und/oder eine Bereitschaftsanzeige gelöscht werden. Der Wert der gemessenen Feldstärke, insbesondere auch dessen Frequenzabhängigkeit wird dann zusammen mit einem Zeitwert in ein Logfile einer Speichereinheit der Recheneinheit abgelegt. Dadurch wird eine Rückverfolgbarkeit möglich.

Als weitere Aktion der Waage beziehungsweise der Mess- und/oder Auswerteelektronik wird ein Sensorsignal oder ein Ausgangssignal an die Ausgabeeinheit 70 übermittelt und dort entsprechend angezeigt. Dies kann ein Alarmton, eine optische Ausgabe wie ein Blinklicht oder eine, auf einem Display dargestellte Warnung oder Information sein.

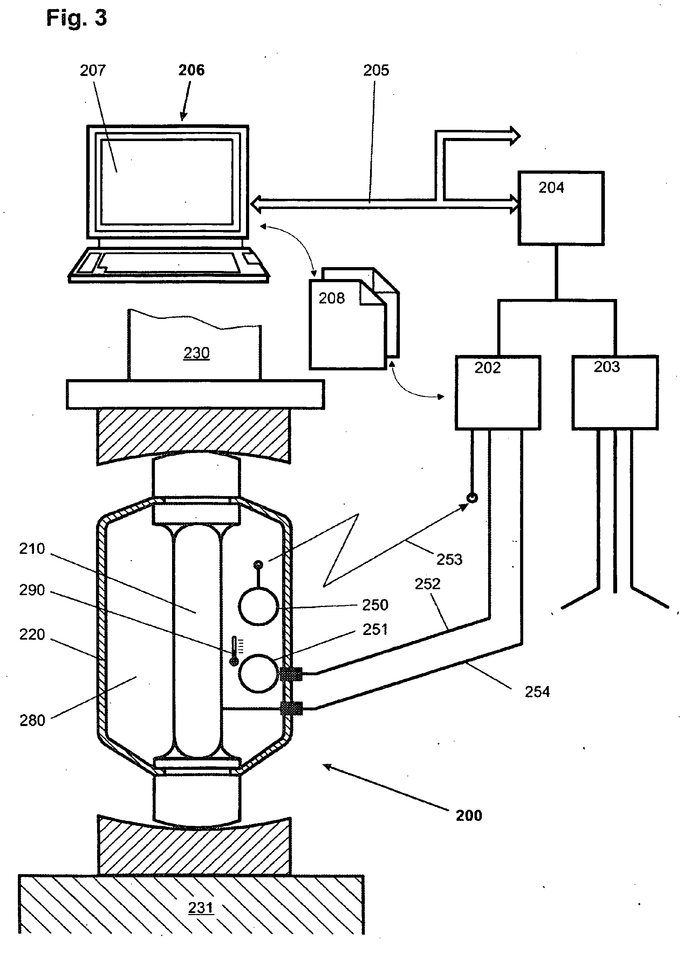

Figur 3 zeigt eine nach dem erfindungsgemässen Verfahren überwachte Kraftmessvorrichtung 200 in Form eines Tanklast- Wägemoduls. Tanklast-Wägemodule werden insbesondere in Industrieanlagen zur Verwiegung des Inhalts von Becken, Tanks, Reaktorbehältern und dergleichen verwendet. Üblicherweise werden pro zu verwiegendem Behälter mehrere Wägemodule zwischen den Füssen 230 des Behälters und dem Fundament 231 angeordnet. Dadurch steht jeder Fuss 230 des Behälters auf einer Kraftmessvorrichtung 200. Um das Gewicht des Behälters und/oder dessen Inhalt zu ermitteln, müssen die von den Kraftmessvorrichtungen 200 erzeugten Wägesignale S_{LC} addiert werden, da es sich um die Wägesignale von Teilmassen handelt. Deshalb weisen die Kraftmessvorrichtungen 200 in Form von Wägemodulen in der Regel keine Ausgabe auf. Die Wägesignale der einzelnen Kraftmessvorrichtungen 200 eines Behälters werden beispielsweise an eine Recheneinheit 206 in Form eines Leitrechners übermittelt, dort ausgewertet und auf der im Leitrechner integrierten Ausgabeeinheit 207, meistens als Teil einer Anlageübersicht dargestellt.

Die Kraftmessvorrichtung 200 weist eine Kraftmesszelle 210 auf, welche von einem Gehäuse 220 umschlossen ist. Das Gehäuse 220 ist in der Regel mit der Kraftmesszelle 210 verschweisst und gegenüber der Umgebung der Kraftmessvorrichtung 200 dicht verschlossen. Im Messeinsatz wird sowohl die Kraftmesszelle 210 als auch das Gehäuse 220 elastisch gestaucht. Der Einfluss des Gehäusewiderstandes auf das Wägesignal ist teilweise kompensierbar und die Hysterese des Wägemoduls bezogen auf den Messbereich vernachlässigbar. Für den hier relativ unwahrscheinlichen Fall des Eindringens hochfrequenter elektromagnetischer Felder in den Innenraum der Kraftmesszelle sind dort der Erfassung hochfrequenter elektromagnetischer Felder dienende Sensoren 250, 251 angebracht, von denen der eine breitbandig ausgelegt und der zweite schmalbandig, einen bestimmten Frequenzbereich, beispielsweise jener gängiger Telekommunikationseinrichtungen erfassend, ausgebildet ist. Diese Sensoren 250, 251 sind über Anschluss-Verbindungen 252 und/oder Funkverbindungen 253, Transmitter 202, Messumformer 203, einen Segmentkoppler 204 und ein Bussystem 205 mit einer Recheneinheit 206 verbunden. Das Wägesignal der Kraftmesszelle 210 kann entweder über diese Verbindungen oder über eine eigene Wägesignal-Verbindung 254 an die Recheneinheit 206 übertragen werden.

In Figur 3 weist die Kraftmessvorrichtung 200 ferner im Innenraum 280 des Gehäuses 220 einen Temperatursensor 290 auf. Die unabhängig voneinander betreibbaren Sensoren 250, 251 haben entsprechend der Parameter des Innenraums Messwerte an die Recheneinheit 206 übermittelt. Die Recheneinheit 206 in Figur 3 ist beispielsweise der Leitrechner eines Prozessleitsystems. Je nach Konfiguration der Kraftmessvorrichtung 200 und der Recheneinheit 206 übermitteln die Sensoren 250, 251 selbständig kontinuierlich oder periodisch und/oder zufällig oder nach Auftreten einer Veränderung entsprechende Sensorsignale an die Recheneinheit 206. Selbstverständlich kann die Recheneinheit 206 die Sensorsignale auch bei den Sensoren 250, 251 kontinuierlich, periodisch oder nach dem Zufallsprinzip abrufen. Da pro Behälter mehrere Kraftmessvorrichtungen 200 verwendet werden, können die Sensorsignale der jeweils anderen Kraftmessvorrichtungen 200 zur Verifizierung der Sensorsignale des der Erfassung hochfrequenter elektromagnetischer Felder dienenden Sensors einer Kraftmessvorrichtung 200 herangezogen werden. Die Werte zur Verifizierung können aber auch bereits im Sensor 250, 251 oder in der Recheneinheit 206 eingespeichert sein. Diese entstammen beispielsweise aus publizierten Tabellen, deren Werte aus anderen Geräten oder aus Internetdaten stammen. So sind zum Beispiel, gültig für den entsprechenden Einsatzort der Kraftmessvorrichtung, Angaben wie Druck-, Temperatur- und Strahlungsbereiche oder Angaben über Erdbeben- Vibrationen bekannt und können zur Verifizierung der Sensorsignale verwendet werden. Sofern ein Teil der Sensorsignale S_{EMS} in der Recheneinheit 206 im Sinne einer Historie gespeichert wird, kann die Analyse dieser Historie zu weiteren Erkenntnissen über den Zustand sowohl der Kraftmesszellen 210 als auch der Sensoren 251, 252 dienen.

Als Sensoren für hochfrequente elektro-magnetische Strahlungen können alle im Stand der Technik bekannten Sensoren eingesetzt werden die in der Lage sind, ein der zu erfassenden Veränderung oder Messgrösse entsprechendes Sensorsignal zu bilden.

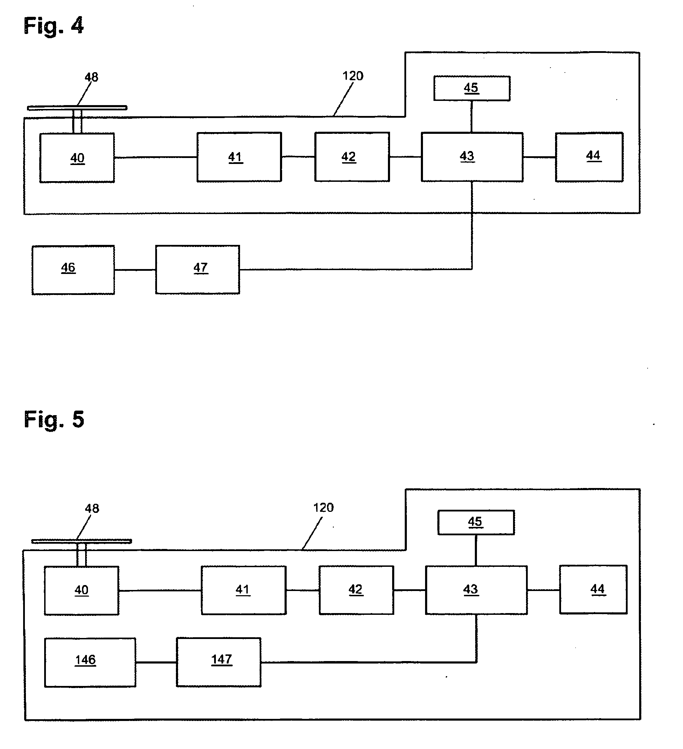

Die Blockschaltbilder in den Figuren 4 bis 8 zeigen der Erfassung hochfrequenter elektromagnetischer Felder dienende Sensoren in verschiedener Ausgestaltung und entsprechend unterschiedlicher Anordnung in oder an einer Kraftmessvorrichtung. Elemente in vergleichbarer Ausgestaltung werden in den Figuren 4 bis 8 mit den gleichen Bezugszeichen versehen und werden nicht im Zusammenhang mit jeder einzelnen Figur neu beschrieben.

Die Figur 4 zeigt in einem Blockschaltbild als Kraftmessvorrichtung eine Waage mit einer Kraftmesszelle 40 welche mit einer Lastaufnahme 48 gekoppelt ist. Das Messsignal der Kraftmesszelle 40 wird über eine Messelektronik mit Analogelektronik 41, und Digitalelektronik 42 erfasst und in einer Recheneinheit 43 ausgewertet. Das ausgewertete Messsignal wird als Wert der Masse einer Last an einer Ausgabeeinheit 45 angezeigt. Ferner kann der Wert über weitere Schnittstellen 44, seien dies Hardware- oder Softwareschnittstellen, weiter verwendet oder Aktionen der Waage auslösen. Einer oder mehrere der Erfassung hochfrequenter elektromagnetischer Felder dienende Sensoren 46 können ausserhalb des Gehäuses 120 angeordnet sein und über eine Auswerteelektronik 47 einen ein vorhandenes hochfrequentes elektromagnetisches Feld charakterisierenden Parameter ermitteln, insbesondere ein Wert einer elektromagnetischen Feldstärke und/oder Frequenz, und den entsprechenden Parameterwert der Recheneinheit 43 zuführen. Ein in einer Speichereinheit der Recheneinheit 43 vordefinierbar abgespeicherter Schwellwert wird nun mit der elektromagnetischen Feldstärke, insbesondere bei einer entsprechenden Frequenz verglichen und bei Überschreiten des Schwellwerts wird eine Aktion der Waage ausgelöst, sei dies nun, dass eine Wiederholung der Messung erfolgt und/oder eine Alarmierung ausgelöst wird und/oder ein Messvorgang unterbrochen und/oder blockiert wird und/oder eine Bereitschaftsanzeige gelöscht wird und/oder der Wert zusammen mit einem Zeitwert in ein Logfile der Speichereinheit abgelegt wird.

Die Figur 5 zeigt in einem zu Figur 4 analogen Blockschaltbild ebenfalls eine Waage. Einer oder mehrere der Erfassung hochfrequenter elektromagnetischer Felder dienende Sensoren 146 sind hier innerhalb des Gehäuses 120 angeordnet und über eine Auswerteelektronik 147 wird ein ein vorhandenes hochfrequentes elektromagnetisches Feld charakterisierender Parameter ermittelt, insbesondere ein Wert einer elektromagnetischen Feldstärke, und der entsprechende Parameterwert der Recheneinheit 43 zugeführt. Dabei kann dieser Wert in seiner Abhängigkeit von der Frequenz oder einem Frequenzbereich ermittelt werden. Ein in einer Speichereinheit der Recheneinheit 43 vordefinierbar abgespeicherter Schwellwert wird nun mit der elektromagnetischen Feldstärke verglichen und bei Überschreiten des Schwellwerts wird eine Aktion der Waage wie oben beschrieben ausgelöst.

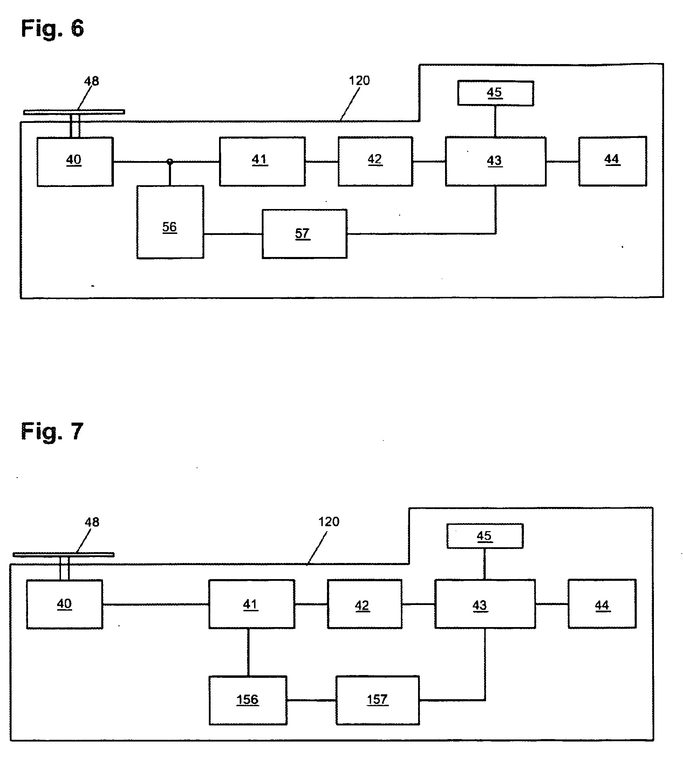

In der Ausführungsform, wie sie im Blockschaltbild in der Figur 6 dargestellt ist, wird als der Erfassung hochfrequenter elektromagnetischer Felder dienender Sensor 56 ein hochfreuqentes Signal induktiv und/oder kapazitiv und/oder mittels einer Antenne an den Messsignalen der Kraftmesszelle 40 ausgekoppelt und über eine Auswerteelektronik 57 der Recheneinheit 43 zugeführt. In einem solchen dem eigentlichen Messignal überlagerten hochfrequenten Signal würde sich ein möglicherweise im Innenraum vorhandenes zu hohes und daher störendes von aussen auf die Waage einwirkendes hochfrequentes elektromagnetisches Feld abbilden.

Die Auskopplung eines hochfrequenten Signals kann auch aus der Analogelektronik 41 erfolgen, wie dies im Blockschaltbild der Figur 7 gezeigt ist. Ferner kann ein solches Signal auch via eine elektrische Versorgungsleitung oder Verbindungsleitung der Waage, ausgekoppelt werden.

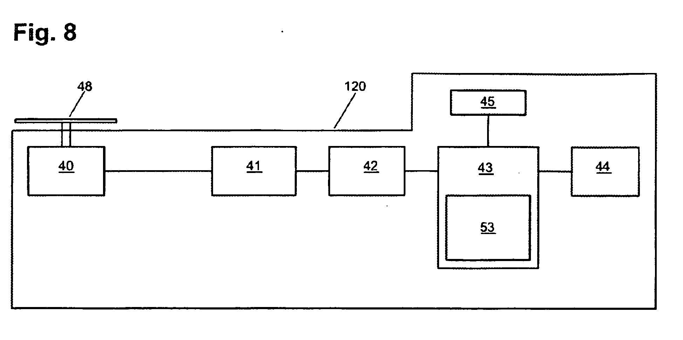

Im Blockschaltbild der Figur 8 ist abgebildet, wie aus der Korrelation der ermittelten Werte weiterer Sensoren, beispielsweise eines Temperatursensors oder gar des Messwerts der Kraftmessvorrichtung selbst, überprüft werden kann, ob eine Schwellwertüberschreitung des Werts eines ein vorhandenes hochfrequentes elektromagnetisches Feld charakterisierenden Parameters von möglicherweise in den Innenraum eindringenden hochfrequenten elektromagnetischen Feldern verursacht wird. Hierfür wird ein Auswerteprogramm 53 benötigt, in welchem solche Parameterwerte mit einem Schwellwert hochfrequenter elektromagnetischer Felder korreliert sind. Eine entsprechende Aktion der Waage kann dann ebenfalls über dieses spezielle Auswerteprogramm 53 ausgelöst werden.

Geeignete, von dem mindestens einen Sensor generierte Sensorsignale könnten auch zur Korrektur des Messergebnisses herangezogen werden, um gegebenenfalls die Anordnung zusätzlicher Messfühler zu vermeiden, wie sie beispielsweise im Stand der Technik zur Kompensation von Hysterese- und/oder Drifterscheinungen verwendet werden. Ein solches Vorgehen der Messwertkorrektur und/oder -kompensation ist allerdings recht aufwändig und soll hier nicht näher beleuchtet werden.

Die Ausführungsbeispiele in der Beschreibung sollen nicht dahingehend verstanden werden, dass die vorliegende Erfindung auf die Anordnung von nur einer Kraftmesszelle in nur einem Gehäuse limitiert ist. Es liegt im Verständnis des Fachmannes, die Erfindung ebenso in Anordnungen anzuwenden, die mindestens zwei Wägezellen in einem Gehäuse beinhalten. Des Weiteren spielt die Koordination von Messungen und Warnungen im Bezug auf den Erfindungsgegenstand keine Rolle.

Sowohl Meldungen / Warnungen in "Echtzeit" als auch Meldungen / Warnungen zeitlich zu den Messungen versetzt sind möglich.

### Bezugszeichenliste

- 1, 11: feststehender Teil
- 2, 12: Lastaufnahmeteil
- 4: Lenker
- 5: Biegelager
- 6: Hebel
- 7: Biegelager
- 8, 18: Hebelarm
- 9: Koppelelement
- 10, 110, 210: Kraftmesszelle
- 13: Mittelteil
- 14: Kraftübertragungsgestänge
- 15: Ausleger
- 16: Permanentmagnet
- 17: Luftspalt
- 19: Spule
- 20, 120, 220: Gehäuse
- 21: gehäusefester Support
- 22: Gehäusedurchführung
- 23: opto-elektrischen Messvorrichtung
- 24: breitbandiger, der Erfassung hochfrequenter elektromagnetischer Felder dienender Sensor
- 30: Lastaufnehmer
- 40: Kraftmesszelle
- 41: Analogelektronik
- 42: Digitalelektronik
- 43: Recheneinheit
- 44: Schnittstellen
- 45: Ausgabeeinheit
- 46, 146: der Erfassung hochfrequenter elektromagnetischer Felder dienender Sensor
- 47, 147: Auswerteelektronik
- 48: Lastaufnahme
- 50: Sensor
- 51: Recheneinheit- Verbindung
- 52: Ausgabe- Verbindung
- 53: Auswerteprogramm
- 57,157: Auswerteelektronik
- 56, 156: Sensor in Form einer Auskopplung eines hochfreuqenten Signals
- 60: Recheneinheit
- 62: Recheneinheit-Ausgabe-Verbindung
- 70: Leuchtdiode als Ausgabeeinheit
- 80, 280: Innenraum
- 100, 200: Kraftmessvorrichtung
- 202: Transmitter
- 203: Messumformer
- 204: Segmentkoppler
- 205: Bussystem
- 206: Recheneinheit / Leitrechner
- 207: Ausgabeeinheit / Leitrechner-Ausgabeeinheit
- 208: Betriebsprogramm
- 230: Behälterfuss
- 231: Fundament
- 250: Sensor für elektromagnetische Strahlung
- 251: weitere Sensoren für elektromagnetische Strahlung
- 252: Anschluss- Verbindung
- 253: Funk- Verbindung
- 254: Wägesignal-Verbindung
- 290: Temperatursensor

## Patentansprüche

1. Verfahren zur Überwachung und/oder zur Bestimmung des Zustandes einer Kraftmessvorrichtung, insbesondere einer Waage, mit mindestens einem, einen Innenraum aufweisenden Gehäuse und mit mindestens einer im Innenraum des mindestens einen Gehäuses eingebauten Kraftmesszelle und mit einer Mess- und/oder Auswerteelektronik, **dadurch gekennzeichnet, dass** durch mindestens einen im Innenraum des Gehäuses und/oder mindestens einen ausserhalb des Gehäuses angeordneten der Erfassung hochfrequenter elektromagnetischer Felder dienenden Sensor mindestens ein ein vorhandenes hochfrequentes elektromagnetisches Feld charakterisierender Parameter ermittelt wird; mindestens ein Wert des ermittelten Parameters mit mindestens einem Schwellwert verglichen wird und bei Überschreiten des Schwellwerts eine Aktion der Kraftmessvorrichtung ausgelöst wird.

2. Verfahren nach Anspruch 1, **dadurch gekennzeichnet, dass** mittels des mindestens einen Sensors elektromagnetische Felder im Frequenzbereich von Telekommunikations-Einrichtungen ermittelt werden.

3. Verfahren nach Anspruch 2, **dadurch gekennzeichnet, dass** als Parameter die Frequenz, der Frequenzbereich und/oder die Feldstärke der elektromagnetischen Felder ermittelt werden.

4. Verfahren nach einem der Ansprüche 1 bis 3, **dadurch gekennzeichnet, dass** die Kraftmessvorrichtung eine Recheneinheit und eine Speichereinheit aufweist, in welcher Recheneinheit ein Programm ausgeführt wird, welches den Wert der ermittelten Feldstärke mit mindestens einem in der Speichereinheit und/oder der Recheneinheit veränderbar vordefinierten Schwellwert vergleicht.

5. Verfahren nach einem der Ansprüche 1 bis 4, **dadurch gekennzeichnet, dass** die Kraftmessvorrichtung eine Speichereinheit aufweist und der ermittelte Wert zur weiteren Verarbeitung in der Speichereinheit abgelegt wird.

6. Verfahren nach Anspruch 4 und 5, **dadurch gekennzeichnet, dass** in der Kraftmessvorrichtung ein Zeitgeber vorhanden ist, wobei die Recheneinheit auf diesen zugreifen kann und das Programm jedem ermittelten Wert, einen Zeitwert zuordnet und das Wertepaar in der Speichereinheit ablegt.

7. Verfahren nach einem der Ansprüche 4 bis 6, **dadurch gekennzeichnet, dass** der Wert der ermittelten Feldstärke in seiner Abhängigkeit von der Frequenz oder von einem Frequenzbereich der elektromagnetischen Felder ermittelt wird.

8. Verfahren nach Anspruch 7, **dadurch gekennzeichnet, dass** die ermittelte Abhängigkeit des Werts der ermittelten Feldstärke von der Frequenz oder von einem Frequenzbereich der elektromagnetischen Felder in der Speichereinheit abgelegt wird.

9. Verfahren nach einem der Ansprüche 1 bis 8, **dadurch gekennzeichnet, dass** die Kraftmessvorrichtung eine Ausgabeeinheit, insbesondere einen Bildschirm einer Anzeige- und Bedieneinheit und/oder mindestens eine Leuchtdiode und/oder einen Drucker aufweist, wobei ein vom ermittelten Wert des das hochfrequente elektromagnetische Feld charakterisierenden Parameters abhängiges Signal an der Ausgabeeinheit ausgegeben wird.

10. Verfahren nach einem der Ansprüche 1 bis 9, **dadurch gekennzeichnet, dass** bei Überschreiten des mindestens einen Schwellwerts eine Wiederholung der Messung erfolgt und/oder eine Alarmierung ausgelöst wird und/oder ein Messvorgang unterbrochen und/oder blockiert wird und/oder eine Bereitschaftsanzeige gelöscht wird und/oder der Wert zusammen mit einem Zeitwert in ein Logfile der Speichereinheit abgelegt wird.

11. Verfahren nach einem der Ansprüche 1 bis 10, **dadurch gekennzeichnet, dass** bei Überschreiten des Schwellwerts eine zum betreffenden Zeitpunkt anstehende Kalibrierung nicht ausgeführt wird und erst nach einem anschliessenden Unterschreiten des Schwellwerts durchgeführt wird.

12. Verfahren nach einem der Ansprüche 4 bis 11, **dadurch gekennzeichnet, dass** zur Kontrolle des mindestens einen Sensors dessen an die Recheneinheit übermittelten Sensorsignale zumindest periodisch in der Recheneinheit durch einen Vergleich mit in der Speichereinheit gespeicherten Verifizierungswerten und Verifizierungstoleranzwerten überprüft wird und bei Abweichung von diesen Verifizierungswerten oder beim Verletzen von vorgegebenen Verifizierungstoieranzwerten ein Fehler registriert und an eine Ausgabeeinheit übermittelt wird.

13. Verfahren nach einem der Ansprüche 1 bis 12, **dadurch gekennzeichnet, dass** zur Ermittlung des mindestens einen ein vorhandenes hochfrequentes elektromagnetisches Feld charakterisierenden Parameters ein Signal aus der Messelektronik ausgekoppelt wird und/oder die elektromagnetische Feldstärke innerhalb und/oder ausserhalb des Gehäuses gemessen wird und/oder an einer Kabelverbindung, vorzugsweise eines elektrischen Versorgungskabels und/oder Verbindungskabel, ein Signal ausgekoppelt wird.

14. Verfahren nach einem der Ansprüche 1 bis 13, **dadurch gekennzeichnet, dass** zusätzlich zu dem der Erfassung hochfrequenter elektromagnetischer Felder dienenden mindestens einen Sensor ein weitere Sensor, insbesondere ein Temperatursensor, vorhanden ist, und dass der mit dem weiteren Sensor ermittelte Parameterwert zusammen mit dem Überschreiten des Schwellwerts zu einer Bewertung einer zu erfolgenden Aktion der Messelektronik herangezogen wird.

15. Verfahren nach einem der Ansprüche 1 bis 14, **dadurch gekennzeichnet, dass** zusätzlich der Verlauf des Kraftmesssignals in einem vergangenen Zeitintervall aufgezeichnet wird, und dass ein daraus ermittelter Parameterwert zusammen mit dem Überschreiten des Schwellwerts zu einer Bewertung einer zu erfolgenden Aktion der Messelektronik herangezogen wird.

16. Verfahren nach einem der Ansprüche 1 bis 15, **dadurch gekennzeichnet, dass** zusätzlich zu dem eine Aktion der Messelektronik auslösenden Schwellwert ein niederer zweiter Schwellwert modifizierbar in der Recheneinheit abgespeichert ist, und dass bei Überschreiten des zweiten Schwellwerts eine Warnung an einer Ausgabeeinheit ausgegeben wird.

17. Kraftmessvorrichtung, geeignet zur Durchführung des Verfahrens nach einem der Ansprüche 1 bis 16 mit mindestens einem, einen Innenraum aufweisenden Gehäuse (20) und mit mindestens einer im Innenraum des mindestens einen Gehäuses eingebauten Kraftmesszelle (110) und mit einer Mess- und/oder Auswerteetektronik (60), **dadurch gekennzeichnet, dass** mindestens ein im Innenraum des Gehäuses und/oder mindestens ein ausserhalb des Gehäuses angeordneter der Erfassung hochfrequenter elektromagnetischer Felder dienender Sensor (50) vorhanden ist.

18. Kraftmessvorrichtung nach Anspruch 17, **dadurch gekennzeichnet, dass** der der Erfassung hochfrequenter elektromagnetischer Felder dienende Sensor mit der Messelektronik in Verbindung steht, wobei bei einem über mindestens einen vordefinierbaren Schwellwert hinausreichenden vom der Erfassung hochfrequenter elektromagnetischer Felder dienenden Sensor ermittelten Wert eine Aktion des Kraftmessvorrichtung auslösbar ist.

19. Kraftmessvorrichtung nach Anspruch 17 oder 18, **dadurch gekennzeichnet, dass** eine Recheneinheit sowie eine Speichereinheit vorhanden ist, wobei in der Recheneinheit ein Programm ausführbar ist, das bei einem über mindestens einen vordefinierbaren Schwellwert hinausreichenden vom der Erfassung hochfrequenter elektromagnetischer Felder dienenden Sensor ermittelten Wert eine Aktion der Kraftmessvorrichtung auslöst und/oder den ermittelten Wert zur weiteren Verarbeitung in der Speichereinheit ablegt.

20. Kraftmessvorrichtung nach einem der Ansprüche 17 bis 19, **dadurch gekennzeichnet, dass** der der Erfassung hochfrequenter elektromagnetischer Felder dienende Sensor als elektrische Schaltung zur Auskopplung eines Signals der Mess- und/oder Auswerteelektronik ausgebildet ist.

21. Kraftmessvorrichtung nach einem der Ansprüche 17 bis 19, **dadurch gekennzeichnet, dass** der der Erfassung hochfrequenter elektromagnetischer Felder dienende Sensor in Form eines breitbandigen und/oder schmalbandigen elektromagnetischen Feldsensors und/oder Antenne ausgebildet ist.

22. Kraftmessvorrichtung nach einem der Ansprüche 17 bis 19, **dadurch gekennzeichnet, dass** der der Erfassung hochfrequenter elektromagnetischer Felder dienende Sensor in Form einer um ein Kabel, insbesondere eines die Kraftmesszelle und/oder die Messelektronik speisenden Stromversorgungskabels, angeordneten induktiven und/oder kapazitiven Auskopplungsschleife und/oder einer Antenne ausgebildet ist.

23. Kraftmessvorrichtung nach einem der Ansprüche 19 bis 22, **dadurch gekennzeichnet, dass** die Recheneinheit und/oder eine Ausgabeeinheit drahtlos oder drahtgebunden mit dem mindestens einen Sensor verbunden sind.

24. Kraftmessvorrichtung nach einem der Ansprüche 17 bis 23, **dadurch gekennzeichnet, dass** in den mindestens einen der Erfassung hochfrequenter elektromagnetischer Felder dienenden Sensor ein Speichermodul und/oder ein Messumformer integriert ist.

25. Kraftmessvorrichtung nach einem der Ansprüche 17 bis 24, **dadurch gekennzeichnet, dass** zusätzlich zum mindestens einen der Erfassung hochfrequenter elektromagnetischer Felder dienenden Sensor ein weiterer Sensor im Innenraum des Gehäuses oder am Gehäuse zur Detektierung von Netzspannungsspitzen in einer die Kraftmesszelle speisenden Stromversorgung angeordnet ist.

26. Kraftmessvorrichtung nach einem der Ansprüche 17 bis 25, **dadurch gekennzeichnet, dass** zusätzlich zum mindestens einen der Erfassung hochfrequenter elektromagnetischer Felder dienenden Sensor mindestens ein weiterer Sensor im Innenraum des Gehäuses oder am Gehäuse zur Detektierung weitere Parameter, insbesondere der Temperatur angeordnet ist.

## Claims

1. Method for monitoring and/or determining the condition of a force-measuring device, in particular a balance, comprising at least one housing containing an interior space and at least one force-measuring cell installed in the interior space of the at least one housing, and further comprising an electronic portion for measuring and/or evaluating a signal, **characterized in that** by means of at least one sensor arranged in the interior space of the housing, and/or at least one sensor arranged outside of the housing for the detection of high-frequency electromagnetic fields at least one parameter is determined which characterizes an existing high-frequency electromagnetic field; that at least one value of the parameter thus determined is compared to at least one threshold value, and in case of a departure beyond the threshold value, a response action of the force-measuring device is triggered.

2. Method according to claim 1, **characterized in that** by means of the at least one sensor, electromagnetic fields in the frequency range of telecommunications equipment are detected.

3. Method according to claim 2, **characterized in that** the at least one parameter to be determined includes one or more of the frequency, the frequency range, and/or the field strength of the electromagnetic fields.

4. Method according to one of the claims 1 to 3, **characterized in that** the force-measuring device comprises a computer unit and a storage unit, and that a program is executed in the computer unit and that the program which compares the value of the measured field strength to at least one threshold value which is predefined with a value that can be changed and resides in the memory unit and/or the computer unit.

5. Method according to one of the claims 1 to 4, **characterized in that** the force-measuring device comprises a memory unit and the measured value is stored in the memory unit for further processing.

6. Method according to claim 4 and 5, **characterized in that** there is a time clock in the force-measuring device, wherein the computer unit can access the time clock, and wherein the program assigns a time value to each measured value and stores the value pair in the memory unit.

7. Method according to one of the claims 4 to 6, **characterized in that** the value of the measured field strength is determined as a function of the frequency or of a frequency range of the electromagnetic fields.

8. Method according to claim 7, **characterized in that** the thus established dependency of the value of the measured field strength on the frequency or on a frequency range of the electromagnetic fields is stored in the memory unit.

9. Method according to one of the claims 1 to 8, **characterized in that** the force-measuring device comprises an output unit, in particular a display screen of an indicating- and operating unit and/or at least one light-emitting diode and/or a printer, wherein a signal that depends on the measured value of the parameter characterizing the high-frequency electromagnetic field is delivered at the output unit.

10. Method according to one of the claims 1 to 9, **characterized in that** in case of a departure beyond the at least one threshold value the measurement is repeated and/or an alarm is triggered and/or a measurement process is aborted and/or blocked and/or an operation-readiness indicator is turned off and/or the value is stored together with a time value in a log file of the memory unit.

11. Method according to one of the claims 1 to 10, **characterized in that** in case of a departure above the threshold value, a calibration that is pending at that time is not executed and will not be carried out until after a subsequent return to the range below the threshold value.

12. Method according to one of the claims 4 to 11, **characterized in that** for monitoring the at least one sensor, the sensor signals which are transmitted from it to the computer unit are verified in the computer unit at least at periodic intervals through a comparison with verification values and verification tolerance values that are stored in the memory unit, and that if a departure from these verification values or a violation of predefined verification tolerance values is detected, an error is registered and signaled to an output unit.

13. Method according to one of the claims 1 to 12, **characterized in that** for determining the at least one parameter characterizing an existing high-frequency electromagnetic field, a signal is tapped off from the electronic measuring portion, and/or that the electromagnetic field strength inside and/or outside the housing is measured, and/or that a signal is tapped off from a cable connection, preferably from an electric power supply cable and/or connecting cable.

14. Method according to one of the claims 1 to 13, **characterized in that** in addition to the at least one sensor serving to determine high-frequency electromagnetic fields, there is a further sensor provided, in particular a temperature sensor, and that the parameter value determined with the further sensor is used as a criterion together with the departure from the threshold value for deciding on a response action to occur in the electronic measuring portion.

15. Method according to one of the claims 1 to 14, **characterized in that** additionally the time profile of the force-measuring signal over a past time interval is registered and that a parameter value that is determined as a result is used as a criterion together with the departure from the threshold value for deciding on a response action to occur in the electronic measuring portion.

16. Method according to one of the claims 1 to 15, **characterized in that** in addition to the threshold value that triggers an action of the electronic measuring portion, a lower second threshold value can be stored in the computer unit as a modifiable value, and that a warning signal is issued in an output unit when said second threshold value is exceeded.

17. Force-measuring device, operable for carrying out the method according to one of the claims 1 to 16, comprising at least one housing containing an interior space and at least one force-measuring cell installed in the interior space of the at least one housing, and further comprising an electronic portion for measuring and/or evaluating a signal, **characterized in that** at least one sensor arranged in the interior space of the housing, and/or at least one sensor arranged outside of the housing is provided for the detection of high-frequency electromagnetic fields.

18. Force-measuring device according to claim 17, **characterized in that** the sensor serving for the detection of high-frequency electromagnetic fields is connected to the electronic measuring portion wherein, if the sensor serving for the detection of high-frequency electromagnetic fields detects a value exceeding at least one pre-definable threshold value, a response action of the force-measuring device can be triggered.

19. Force-measuring device according to claim 17 or 18, **characterized in that** a computer unit as well as a memory unit are provided, wherein the computer unit is operable to execute a program which, if the sensor serving for the detection of high-frequency electromagnetic fields detects a value exceeding at least one pre-definable threshold value, triggers a response action of the force-measuring device and/or stores the detected value in the memory unit for further processing.

20. Force-measuring device according to one of the claims 17 to 19, **characterized in that** the sensor serving for the detection of high-frequency electromagnetic fields is configured as an electrical circuit for tapping off a signal of the electronic measuring- and/or processing portion.

21. Force-measuring device according to one of the claims 17 to 19, **characterized in that** the sensor serving for the detection of high-frequency electromagnetic fields is configured in the form of a broadband and/or narrowband electromagnetic field sensor and/or of an antenna.

22. Force-measuring device according to one of the claims 17 to 19, **characterized in that** the sensor serving for the detection of high-frequency electromagnetic fields is configured in the form of an inductive and/or capacitative coupling loop and/or an antenna arranged around a cable, in particular a power supply cable that supplies the force-measuring cell and/or the electronic measuring portion.

23. Force-measuring device according to one of the claims 19 to 22, **characterized in that** the computer unit and/or an output unit is connected to the at least one sensor through a wireless or wire-bound connection.

24. Force-measuring device according to one of the claims 17 to 23, **characterized in that** a memory module and/or a measurement converter is incorporated in the at least one sensor serving for the detection of high-frequency electromagnetic fields.

25. Force-measuring device according to one of the claims 17 to 24, **characterized in that**, in addition to the at least one sensor serving for the detection of high-frequency electromagnetic fields, a further sensor is arranged in the interior space of the housing or on the housing for the purpose of detecting line power peaks in a power supply that feeds the force-measuring cell.

26. Force-measuring device according to one of the claims 17 to 25, **characterized in that**, in addition to the at least one sensor serving for the detection of high-frequency electromagnetic fields, at least one further sensor is arranged in the interior space of the housing or on the housing for the purpose of detecting further parameters, in particular the temperature.

## Revendications

1. Procédé pour contrôler et/ou déterminer l'état d'un dispositif de mesure de force, en particulier une balance, comprenant au moins un boîtier présentant un espace intérieur et au moins une cellule de mesure de force intégrée dans l'espace intérieur du au moins un boîtier et une électronique de mesure et/ou d'analyse, **caractérisé en ce qu'**au moins un paramètre caractérisant un champ électromagnétique à haute fréquence est déterminé par au moins un capteur disposé dans l'espace intérieur du boîtier et/ou au moins un capteur disposé à l'extérieur du boîtier et servant à la détection de champs électromagnétiques à haute fréquence, au moins une valeur du paramètre déterminé est comparée avec au moins une valeur seuil et une action du dispositif de mesure de force est déclenchée en cas de dépassement de la valeur seuil.

2. Procédé selon la revendication 1, **caractérisé en ce que** des champs électromagnétiques dans la bande de fréquences de dispositifs de télécommunication sont déterminés au moyen du au moins un capteur.

3. Procédé selon la revendication 2, **caractérisé en ce que** la fréquence, la bande de fréquences et/ou l'intensité de champ des champs électromagnétiques sont déterminés comme paramètres.

4. Procédé selon l'une quelconque des revendications 1 à 3, **caractérisé en ce que** le dispositif de mesure de force présente une unité de calcul et une unité de stockage, dans laquelle unité de calcul un programme est exécuté, lequel compare la valeur de l'intensité de champ électromagnétique avec au moins une valeur seuil prédéfinie et pouvant être modifiée dans l'unité de stockage et/ou l'unité de calcul.

5. Procédé selon l'une quelconque des revendications 1 à 4, **caractérisé en ce que** le dispositif de mesure de force présente une unité de stockage et la valeur déterminée est déposée dans l'unité de stockage pour le traitement ultérieur.

6. Procédé selon les revendications 4 et 5, **caractérisé en ce qu'**une horloge est présente dans le dispositif de mesure, l'unité de calcul pouvant avoir recours à cette horloge et le programme attribuant une valeur de temps à chaque valeur déterminée et déposant le couple de valeurs dans l'unité de stockage.

7. Procédé selon l'une quelconque des revendications 4 à 6, **caractérisé en ce que** la valeur de l'intensité de champs est déterminée dans sa dépendance de la fréquence ou d'une bande de fréquences des champs électromagnétiques.

8. Procédé selon la revendication 7, **caractérisé en ce que** la dépendance déterminée entre la valeur de l'intensité de champ déterminée et la fréquence ou une bande de fréquence de champs électromagnétique est déposée dans l'unité de stockage.

9. Procédé selon l'une quelconque des revendications 1 à 8, **caractérisé en ce que** le dispositif de mesure de force présente une unité de sortie, en particulier un écran d'une unité d'affichage et de commande et/ou au moins une diode électroluminescente et/ou une imprimante, un signal dépendant de la valeur déterminée du paramètre caractérisant le champ électromagnétique à haute fréquence étant sorti sur l'unité de sortie.

10. Procédé selon l'une quelconque des revendications 1 à 9, **caractérisé en ce que**, en cas de dépassement de la au moins une valeur seuil, une répétition de la mesure intervient et/ou une mise en alerte est déclenchée et/ou une opération de mesure est interrompue et/ou bloquée et/ou un affichage de disponibilité est effacé et/ou la valeur est déposée conjointement avec une valeur de temps dans un fichier journal (Logfile) de l'unité de stockage.

11. Procédé selon l'une quelconque des revendications 1 à 10, **caractérisé en ce qu'**un étalonnage en attente au moment concerné n'est pas exécuté en cas de dépassement de la valeur seuil et n'est effectué qu'après un dépassement consécutif dans l'autre direction de la valeur seuil.

12. Procédé selon l'une quelconque des revendications 4 à 11, **caractérisé en ce que**, pour le contrôle du au moins un capteur, ses signaux de capteur transmis à l'unité de calcul sont contrôlés au moins périodiquement dans l'unité de calcul par une comparaison avec des valeurs de vérification et des valeurs de tolérance de vérification stockées dans l'unité de stockage et, en cas d'écart par rapport à ces valeurs de vérification ou lors de violation de valeurs de tolérance de vérification prédéfinies, une erreur est enregistrée et transmise à une unité de sortie.

13. Procédé selon l'une quelconque des revendications 1 à 12, **caractérisé en ce que**, pour déterminer le au moins un paramètre caractérisant un champ électromagnétique présent à haute fréquence, un signal est découplé de l'électronique de mesure et/ou l'intensité de champ électromagnétique est mesurée à l'intérieur et/ou à l'extérieur du boîtier et/ou un signal est découplé sur une liaison de câble, de préférence un câble d'alimentation électrique et/ou un câble de liaison.

14. Procédé selon l'une quelconque des revendications 1 à 13, **caractérisé en ce que**, en supplément du au moins un capteur servant à la détection de champs électromagnétiques à haute fréquence, un autre capteur, en particulier un capteur de température est présent et **en ce que** la valeur de paramètre déterminée avec l'autre capteur est utilisée conjointement avec le dépassement de la valeur seuil pour une analyse d'une action à effectuer de l'électronique de mesure.

15. Procédé selon l'une quelconque des revendications 1 à 14, **caractérisé en ce que** en supplément la courbe du signal de mesure de force est enregistrée dans un intervalle de temps passé et **en ce qu'**une valeur de paramètre déterminée à partir de là est utilisée conjointement avec le dépassement de la valeur seuil pour une analyse d'une action à effectuer de l'électronique de mesure.

16. Procédé selon l'une quelconque des revendications 1 à 15, **caractérisé en ce que**, en supplément de la valeur seuil déclenchant une action de l'électronique de mesure, une seconde valeur seuil plus faible est stockée de façon modifiable dans l'unité de calcul et **en ce que**, en cas de dépassement de la seconde valeur seuil, un avertissement est édité sur une unité de sortie.

17. Dispositif de mesure de force, susceptible de mettre en oeuvre du procédé selon l'une quelconque des revendications 1 à 16, comprenant au moins un boîtier (20) présentant un espace intérieur et au moins une cellule de mesure de force (110) intégrée dans l'espace intérieur du au moins un boîtier et une électronique de mesure et/ou d'analyse (60), **caractérisé en ce qu'**au moins un capteur (50) disposé dans l'espace intérieur du boîtier et/ou au moins un capteur disposé à l'extérieur du boîtier servant à la détection de champs électromagnétiques à haute fréquence est présent.

18. Dispositif de mesure de force selon la revendication 17, **caractérisé en ce que** le capteur servant à la détection de champs électromagnétiques à haute fréquence est en liaison avec l'électronique de mesure, une action du dispositif de mesure de force pouvant être déclenchée dans le cas d'une valeur dépassant au moins une valeur seuil prédéfinissable et déterminée par le capteur servant à la détection de champs électromagnétiques à haute fréquence.

19. Dispositif de mesure de force selon la revendication 17 ou 18, **caractérisé en ce qu'**une unité de calcul et une unité de stockage sont présentes, un programme pouvant être exécuté dans l'unité de calcul, lequel programme déclenche une action du dispositif de mesure de force dans le cas d'une valeur dépassant au moins une valeur seuil prédéfinissable et déterminée par le capteur servant à la détection de champs électromagnétiques à haute fréquence et/ou dépose la valeur déterminée pour le traitement ultérieur dans l'unité de stockage.

20. Dispositif de mesure de force selon l'une quelconque des revendications 17 à 19, **caractérisé en ce que** le capteur servant à la détection de champs électromagnétiques à haute fréquence est conçu comme circuit électrique pour le découplage d'un signal de l'électronique de mesure et/ou de l'électronique d'analyse.

21. Dispositif de mesure de force selon l'une quelconque des revendications 17 à 19, **caractérisé en ce que** le capteur servant à la détection de champs électromagnétiques à haute fréquence est conçu sous la forme d'un capteur de champ électromagnétique à large bande et/ou à bande étroite et/ou d'une antenne.

22. Dispositif de mesure de force selon l'une quelconque des revendications 17 à 19, **caractérisé en ce que** le capteur servant à la détection de champs électromagnétiques à haute fréquence est conçu sous forme d'une coupe de découplage inductive et/ou capacitive, disposée autour d'un câble, en particulier d'un câble d'alimentation électrique alimentant la cellule de mesure de force et/ou l'électronique de mesure et/ou d'une antenne.

23. Dispositif de mesure de force selon l'une quelconque des revendications 19 à 22, **caractérisé en ce que** l'unité de calcul et/ou une unité de sortie sont reliées sans fil ou avec fil à au moins un capteur.

24. Dispositif de mesure de force selon l'une quelconque des revendications 17 à 23, **caractérisé en ce qu'**un module de stockage et/ou un convertisseur de mesure est intégré dans le au moins un capteur servant à la détection de champs électromagnétiques à haute fréquence.

25. Dispositif de mesure de force selon l'une quelconque des revendications 17 à 24, **caractérisé en ce que**, en supplément d'au moins un capteur servant à la détection de champs électromagnétiques à haute fréquence, un autre capteur est disposé à l'intérieur du boîtier ou sur le boîtier pour la détection de pointes de tension de réseau dans une alimentation électrique alimentant la cellule de mesure de force.

26. Dispositif de mesure de force selon l'une quelconque des revendications 17 à 25, **caractérisé en ce que**, en supplément du au moins un capteur servant à la détection de champs électromagnétiques à haute fréquence, au moins un autre capteur est disposé à l'intérieur du boîtier ou sur le boîtier pour la détection d'autres paramètres, en particulier de la température.
